# EUROPÄISCHE PATENTSCHRIFT

(11) **EP 3 142 530 B1**
(45) Veröffentlichungstag und Bekanntmachung des Hinweises auf die Patenterteilung: **09.08.2023**
(21) Anmeldenummer: 15729070.1
(22) Anmeldetag: 13.05.2015
(51) Int. Cl.: A47J 31/44

(54) **AUSLAUFEINRICHTUNG FÜR EINE MILCHSCHÄUMVORRICHTUNG**
OUTLET DEVICE FOR A MILK FOAMER
DISPOSITIF D'ÉCOULEMENT POUR UN DISPOSITIF DE MOUSSE DE LAIT

(30) Priorität: 14.05.2014 EP 14405045
(43) Veröffentlichungstag der Anmeldung: 22.03.2017
(73) Patentinhaber: JURA Elektroapparate AG, 4626 Niederbuchsiten (CH)
(72) Erfinder: BÜTTIKER, Philipp, 4625 Oberbuchsiten (CH); ULLMANN, Erich, 4622 Egerkingen (CH)
(74) Vertreter: EGLI-EUROPEAN PATENT ATTORNEYS
(86) Internationale Anmeldenummer: PCT/CH2015/000076
(87) Internationale Veröffentlichungsnummer: WO 2015/172261

(56) Entgegenhaltungen:
- EP-A1- 2 446 792
- EP-A1- 2 606 783
- EP-A2- 1 716 798
- EP-A2- 1 733 663
- WO-A1-2013/056871
- DE-A1-102011 053 216
- US-A1- 2013 280 403

## Beschreibung

Die vorliegende Erfindung betrifft eine Auslaufeinrichtung für eine Milchschäumvorrichtung mit einem ersten Teil und einem davon abnehmbar ausgebildeten zweiten Teil.

Geräte für die Zubereitung von Heissgetränken, insbesondere Kaffee-Zubereitungsautomaten weisen oft eine automatische oder halbautomatisch betreibbare Vorrichtung zum Zubereiten von Milchschaum auf. Insbesondere zur Zubereitung von Heissgetränken wie beispielsweise Cappuccino oder Latte Macchiato kann mittels einer derartigen Milchschäumvorrichtung der zusätzlich benötigte Milchschaum erzeugt und ausgegeben werden.

Es ist hierbei üblich, dass eine derartige Milchschäumvorrichtung Frischmilch und gegebenenfalls Luft durch Ausnutzung des Venturi-Effekts ansaugt, emulgiert und aufschäumt, wobei in einem Bereich der Milchschäumvorrichtung heisser Dampf eingeleitet wird, sodass dieser Dampf an einem Milcheinlasskanal vorbeiströmt und dabei einen Unterdruck erzeugt, wobei infolge des Unterdrucks Milch durch einen Milcheinlasskanal aus einem Vorratsbehälter und gegebenenfalls Luft durch eine Lufteinlassöffnung angesaugt wird.

Derartige Milchschäumvorrichtungen weisen in Strömungsrichtung der aufzuschäumenden Milch gesehen eine Emulsionskammer und einen der Emulsionskammer nachgeordneten Ausgabebereich auf. Insbesondere dieser Ausgabebereich, in welchem oftmals eine Abbremseinrichtung zum Abbremsen des in der Emulsionskammer verwirbelten Fluides vorgesehen ist, weist nach dem Bezug von Milchschaum oftmals Milchrückstände auf, welche unter hygienischen Gesichtspunkten ein Problem darstellen können.

Aus der Technik sind daher austauschbare Düsen für herkömmliche Milchschäumvorrichtungen bekannt, welche auf die Milchschäumvorrichtungen aufsteckbar sind und von einer Bedienperson nach dem Bezug von Milchschaum abgenommen und gereinigt werden können.

Die EP 1 733 663 82 A2 weist eine Düse für eine Milchschäumvorrichtung auf, welche aus zwei spritzgegossenen Kunststoffteilen besteht, welche aus gleichartigen Kunststoffmaterialien gebildet sind und ineinander steckbar bzw. - klebbar ausgebildet sind.

Die EP 1 228 730 A1 offenbart ein Dampfschäumgerät ohne Emulsionskammer mit einem abnehmbar ausgebildeten Schäumkopf. Der abnehmbar ausgebildete Schäumkopf ist aus zwei mittels Schraubverbindung verbundenen Teilen gebildet.

Die EP 1 716 796 B1 offenbart eine Aufschäumvorrichtung für Milch mit einer Emulsionskammer, wobei eine den Schaumstrom regelnde Einrichtung zu Reinigungszwecken von der Aufschäumvorrichtung abnehmbar ausgebildet ist. Das abnehmbare den Schaumstrom regelnde Teil ist im Giessverfahren aus einem Kunststoffmaterial oder einem Elastomere gebildet.

Die US 2013/0280403 A1 offenbart eine Milchschäumvorrichtung mit einer Auslaufeinrichtung, welche aufweist: einen aus einem ersten Teil und einem zweiten Teil zusammengesetzten Körper, welcher eine Emulsionskammer, einen Fluid-Einlass zum Einlassen eines Fluids in Form eines Gemischs aus Milch und Luft oder eines Gemischs aus Milch, Luft und Dampf in die Emulsionskammer und einen Ausgabebereich mit mindestens einer Auslauföffnung umfasst, wobei die Emulsionskammer derart ausgebildet ist, dass ein durch den Fluid-Einlass eingelassenes Gemisch aus Milch und Luft oder aus Milch, Luft und Dampf in der Emulsionskammer ein emulgiertes Fluid in Form einer Milch und Luft enthaltenden Emulsion bildet, und wobei die Auslauföffnung zum Ausgeben des in der Emulsionskammer gebildeten emulgierten Fluids ausgebildet ist. In dem ersten Teil sind zumindest ein Bereich der Emulsionskammer und der Fluid-Einlass ausgebildet, wobei das zweite Teil den Ausgabebereich mit der mindestens einen Auslauföffnung aufweist. Ein erster Bereich des ersten Teils und ein erster Bereich des zweiten Teils sind jeweils zueinander komplementäre Verbindungsbereiche, an denen der erste Bereich des ersten Teils und der erste Bereich des zweiten Teils voneinander trennbar verbunden sind, sodass das zweite Teil von dem ersten Teil abnehmbar ist.

Die bekannten Lösungen weisen den Nachteil auf, dass durch die Abnehmbarkeit der aus Hygienegründen regelmässig zu reinigenden Teile eine Dichtigkeit zwischen einem in Ausgaberichtung des Fluides stromaufwärts angeordneten Teil und dem stromabwärts angeordneten abnehmbaren Teil oftmals nicht gewährleistet ist. Um eine Dichtigkeit zu erzielen, sind oftmals materialaufwendige, kostenträchtige und schwierig handhabbare zusätzliche Dichteinrichtungen erforderlich.

Der vorliegenden Erfindung liegt daher die Aufgabe zugrunde, eine Auslaufeinrichtung für eine Milchschäumvorrichtung anzugeben, bei welcher auf einfache und kostensparende Weise die Dichtigkeitseigenschaften verbessert sind.

Die Aufgabe wird gelöst durch eine Auslaufeinrichtung für eine Milchschäumvorrichtung mit den Merkmalen des unabhängigen Patentanspruches 1.

Insbesondere wird die Aufgabe gelöst durch eine Auslaufeinrichtung für eine Milchschäumvorrichtung, welche einen aus einem ersten Teil und einem zweiten Teil zusammengesetzten Körper aufweist, welcher eine Emulsionskammer, einen Fluid-Einlass zum Einlassen eines Fluids in Form eines Gemischs aus Milch und Luft oder eines Gemischs aus Milch, Luft und Dampf in die Emulsionskammer und einen Ausgabebereich mit mindestens einer Auslauföffnung umfasst, wobei die Emulsionskammer derart ausgebildet ist, dass ein durch den Fluid-Einlass eingelassenes Gemisch aus Milch und Luft oder aus Milch, Luft und Dampf in der Emulsionskammer ein emulgiertes Fluid in Form einer Milch und Luft enthaltenden Emulsion bildet, wobei die Auslauföffnung zum Ausgeben des in der Emulsionskammer gebildeten emulgierten Fluids ausgebildet ist, wobei in dem ersten Teil zumindest ein Bereich der Emulsionskammer und der Fluid-Einlass ausgebildet sind und das zweite Teil den Ausgabebereich mit der mindestens einen Auslauföffnung aufweist.

Das erste Teil weist einen ersten Bereich des ersten Teils und einen zweiten Bereich des ersten Teils auf, wobei das zweite Teil einen ersten Bereich des zweiten Teils und einen zweiten Bereich des zweiten Teils aufweist. Der erste Bereich des ersten Teils bildet eine äussere Umfangsfläche des ersten Teils und erstreckt sich derart entlang einer Längsachse des ersten Teils, dass die Emulsionskammer von dem ersten Bereich des ersten Teils umgeben ist und der erste Bereich des ersten Teils ein erstes Ende aufweist, welches in Fliessrichtung des emulgierten Fluids dem Fluid-Einlass nachgeordnet ist. Der zweite Bereich des ersten Teils ist an einer der Emulsionskammer zugewandten Fläche des ersten Bereichs des ersten Teils angeordnet, sodass der zweite Bereich des ersten Teils zumindest einen Bereich der Emulsionskammer in radialer Richtung mit Bezug auf die Längsachse des ersten Teils begrenzt. Der erste Bereich des ersten Teils umfasst zumindest einen Verbindungsbereich des ersten Teils, und der erste Bereich des zweiten Teils umfasst zumindest einen Verbindungsbereich des zweiten Teils, wobei der zumindest eine Verbindungsbereich des ersten Teils und der zumindest eine Verbindungsbereich des zweiten Teils derart komplementär zueinander geformt sind, dass der erste Bereich des ersten Teils und der erste Bereich des zweiten Teils an dem Verbindungsbereich des ersten Teils und an dem Verbindungsbereich des zweiten Teils voneinander trennbar verbunden sind, sodass das zweite Teil von dem ersten Teil abnehmbar ist.

Gemäss der Erfindung ist das erste Teil zumindest in dem ersten Bereich des ersten Teils aus einem ersten Werkstoff gebildet, das zweite Teil zumindest in dem ersten Bereich des zweiten Teils aus einem zweiten Werkstoff gebildet und das erste Teil in dem zweiten Bereich des ersten Teils aus einem dritten Werkstoff gebildet, wobei der erste Werkstoff ein hartes Kunststoffmaterial ist und der dritte Werkstoff ein Weichkunststoff ist und weicher als der erste Werkstoff ist und wobei der zweite Bereich des ersten Teils sich an dem ersten Ende des ersten Bereichs des ersten Teils um die Längsachse des ersten Teils derart erstreckt, dass sich der zweite Bereich (12) des ersten Teils (10) in Fliessrichtung des emulgierten Fluids am stromabwärts gelegenen Ende des ersten Teils (10)in einen Wulstbereich aufweitet und dass, wenn das zweite Teil an dem ersten Teil so angeordnet ist dass der erste Bereich des ersten Teils und der erste Bereich des zweiten Teils an dem Verbindungsbereich des ersten Teils und an dem Verbindungsbereich des zweiten Teils verbunden sind, der Wulstbereich des zweiten Bereichs (12) des ersten Teils an dem zweiten Bereich des zweiten Teils anliegt unter Ausbildung eines um die Längsachse des ersten Teils umlaufenden Dichtungsbereichs.

Hierbei ist in dem ersten Teil die Emulsionskammer zum Bilden des emulgierten Fluides (z.B. eines Milch-Luft-Dampf-Gemisch) bzw. zumindest ein Bereich der Emulsionskammer und ausserdem der Fluid-Einlass vorgesehen. Dieses erste Teil ist auch nach einem Bezug von aufgeschäumter Milch relativ arm an die hygienischen Verhältnisse beeinträchtigenden Milchrückständen ist. Diese bilden sich vielmehr in dem zweiten Teil, in welchem der Ausgabebereich mit der mindestens einen Auslauföffnung zum Ausgeben des emulgierten Fluides, in der Regel also des emulgierten und aufgeschäumten Milchschaums, vorgesehen ist. Durch die abnehmbare Ausgestaltung des zweiten Teils ist dieses sehr einfach zu reinigen. Dadurch, dass die zueinander komplementär ausgebildeten Verbindungsbereiche des ersten Teils einerseits und des zweiten Teils andererseits aus unterschiedlichen Werkstoffen gebildet ist, ergeben sich bereits inhärent vorteilhafte Dichtungseigenschaften. Insbesondere bei einer Härtedifferenz zwischen den verwendeten Werkstoffen, beispielsweise bei einem Verwenden von Kunststoffen unterschiedlicher Härten für den ersten Werkstoff bzw. den zweiten Werkstoff, werden auf diese Weise vorteilhafte Dichtungseigenschaften zwischen dem ersten Teil und dem zweiten Teil im zusammengesetzten Zustand erhalten.

Vorteilhafte Weiterbildungen der erfindungsgemässen Lösung sind in den abhängigen Patentansprüchen angegeben.

So ist es beispielsweise vorgesehen, dass der erste Werkstoff härter als der zweite Werkstoff ist. Insbesondere ist hierbei vorgesehen, dass der zweite Werkstoff ein Weichkunstoff ist. Durch das Vorsehen des härteren der verwendeten Werkstoffe als ersten Werkstoff, d. h. an dem Verbindungsbereich des ersten Teils, ist das erste Teil der Auslaufeinrichtung, das in der Regel nicht oder nur mit erhöhtem Wartungsaufwand auswechselbar ausgestaltet ist, sehr beständig, und zwar auch in diesem aus dem harten Werkstoff, insbesondere aus dem Hartkunstoff gebildeten Verbindungsbereich des ersten Teils. Indem nun der Verbindungsbereich des zweiten Teils, der komplementär zu dem Verbindungsbereich des ersten Teils ausgebildet ist, aus einem weicheren Werkstoff, insbesondere aus einem Weichkunstoff gebildet ist, ergeben sich sehr vorteilhafte Dichtungseigenschaften zwischen dem ersten Teil und dem abnehmbar ausgebildeten zweiten Teil.

Gemäss der Erfindung ist es vorgesehen, dass das erste Teil in einem zweiten Bereich aus einem dritten Werkstoff gebildet ist, wobei der dritte Werkstoff weicher als der erste Werkstoff ist. Insbesondere liegt dieser zweite Bereich des ersten Teils in Durchströmungsrichtung des auszugebenden emulgierten Fluides (z.B. eines Milch-Luft-Dampf-Gemischs) den zueinander komplementär ausgebildeten Verbindungsbereichen nachgeordnet. Insbesondere dann, wenn durch die zwischen dem ersten Teil und dem zweiten Teil hergestellte Verbindung eine Anpress- oder Andrückkraft auf das erste Teil ausgeübt wird, infolge derer dieser zweite Bereich begrenzt verformt wird, kann durch das Ausbilden des zweiten Bereichs aus einem weicheren Werkstoff als der Werkstoff des ersten Bereichs eine vorteilhafte Dichtungseigenschaft erzielt werden.

In diesem Zusammenhang ist es erfindungsgemäss dass der zweite Bereich des ersten Teils an einem zweiten Bereich des zweiten Teils anliegt, und zwar unter Ausbildung eines umlaufenden Dichtungsbereichs. Insbesondere in Kombination mit der beschriebenen begrenzten Verformung des relativ weichen zweiten Bereichs des ersten Teils ergibt sich hierdurch im Hinblick auf die Verbindung zwischen dem ersten Teil und dem zweiten Teil ein dichter Bereich, welcher auf der gesamten Umfangsfläche des Kontaktbereichs zwischen dem ersten Teil und dem zweiten Teil dicht ist, was die Dichtungseigenschaften weiter verbessert.

Gemäss einem weiteren Aspekt der Erfindung ist es vorgesehen, dass im zusammengesetzten Zustand der umlaufende Dichtungsbereich in Fliessrichtung des emulgierten Fluides (eines Milch-Luft-Dampf-Gemischs) gesehen dem Verbindungsbereich nachgeordnet ist. Hierdurch ergibt sich ein besonders einfacher dichter Aufbau.

Gemäss einem weiteren Aspekt der Erfindung ist es vorgesehen, dass die zueinander komplementären Verbindungsbereiche Gewindebereiche sind. In bevorzugter Weise sind die komplementären Gewindebereiche zweigängig ausgebildete Gewindebereiche. Hierdurch ist ein einfaches Auf- bzw. Abschrauben des zweiten Teils an das erste Teil bzw. von dem ersten Teil möglich, bei gleichzeitig guten Dichtungseigenschaften im zusammengebauten Zustand. Hierdurch ist eine besondere einfache Reinigung des zweiten Teils, d. h. eine Befreiung von Milchschaumrückständen möglich.

Gemäss einem weiteren Aspekt der Erfindung ist es vorgesehen, dass das erste Teil und/oder das zweite Teil jeweils im Spritzgussverfahren hergestellt ist bzw. sind. Eine Herstellung im Spritzgussverfahren, welche für Hartkunstoff genauso möglich ist wie für Weichkunstoff, ermöglicht eine besonders kostengünstige Herstellung der erfindungsgemässen Auslaufeinrichtung.

Gemäss einem weiteren Aspekt der Erfindung ist es vorgesehen, dass der erste Bereich des ersten Teils und der zweite Bereich des ersten Teils voneinander trennbar ausgebildet sind. Mit anderen Worten, in diesem Fall ist das erste Teil seinerseits mehrteilig aufgebaut. Insbesondere in Kombination mit einer Herstellung der Teile in Spritzgussverfahren ist es hiermit möglich, den relativ harten ersten Bereich des ersten Teils und den weicheren Teil des ersten Teils jeweils getrennt im Spritzgussverfahren herzustellen, was die Herstellung der Auslaufeinrichtung insgesamt vereinfacht, bei unverändert guten Dichtungseigenschaften.

Gemäss einem weiteren Aspekt der Erfindung ist es vorgesehen, dass das zweite Teil zumindest bereichsweise und vorzugsweise vollständig aus einem transparenten Material ausgebildet ist. Besonders vorzugsweise ist das zweite Teil zumindest bereichsweise und vorzugsweise vollständig aus kristallklarem Kunststoff ausgebildet. Eine transparente oder teiltransparente Ausbildung des zweiten Teils ermöglicht eine einfache visuelle Kontrolle des Verschmutzungsgrades (Verunreinigungsgrades mit Michschaumrückständen) des zweiten Teils. In Kombination mit einer aktiven Beleuchtung, beispielsweise mittels einer geeigneten Lichtquelle (LED) kann eine derartige visuelle Kontrolle weiter vereinfacht werden. Weiterhin ist es denkbar, mit einem an geeigneter Stelle angebrachten Sensor mit zugehöriger Auswertungselektronik den Verschmutzungsgrad des zweiten Teils automatisch festzustellen und ein Signal, beispielsweise eine Reinigungsaufforderung, auszugeben oder eine durchzuführende Reinigung automatisiert vom Gerät durchführen zu lassen.

Gemäss einem weiteren Aspekt der Erfindung ist es vorgesehen, dass das erste Teil zumindest bereichsweise als eine Hülse, vorzugsweise als eine zylindrische Hülse und besonders vorzugsweise als eine zylindrische Metallhülse ausgebildet ist. Insbesondere ist das erste Teil in dessen ersten Bereich als zylindrische Metallhülse ausgebildet. Hierdurch werden das optische Erscheinungsbild und die Stabilität des ersten Teils entscheidend verbessert.

Gemäss einem weiteren Aspekt der Erfindung ist es vorgesehen, dass die Emulsionskammern einen ersten Emulsionsbereich und einen damit mittels eines Verbindungskanals verbundenen zweiten Emulsionsbereich aufweist. Der Verbindungskanal weist hierbei - in Strömungsrichtung des Fluides gesehen - einen gegenüber den Emulsionsbereichen deutlich verkleinerten Querschnitt auf. Die Emulsionsbereiche sind innenseitig jeweils von dem ersten Werkstoff zumindest bereichsweise unmittelbar umgrenzt. Dadurch also, dass zumindest Teile der Emulsionskammer bzw. Emulsionskammern des ersten Teils unmittelbar aus dem Werkstoff gebildet sind, aus welchem auch der erste Bereich des ersten Teils, d. h. der Verbindungsbereich des ersten Teils zu dem zweiten Teil gefertigt ist, ist eine besonders einfache Herstellung des ersten Teils möglich, wobei gleichzeitig durch die Wahl eines relativ harten Werkstoffs die Beständigkeit des ersten Teils gewährleistet ist.

Gemäss einem weiteren Aspekt der Erfindung ist es vorgesehen, dass das erste Teil, das zweite Teil oder sowohl das erste Teil als auch das zweite Teil jeweils einen Anschlagbereich zur Begrenzung einer für die Herstellung der Verbindung zwischen dem ersten Teil und dem zweiten Teil notwendigen Bewegung aufweist bzw. aufweisen. Eine derartige Bewegung ist insbesondere dann, wenn eine gewindegängige Verbindung zwischen dem ersten Teil und dem zweiten Teil hergestellt werden soll, eine Drehbewegung, sodass in diesem Fall der Anschlagbereich bzw. die Anschlagbereiche als Drehanschlag ausgebildet ist bzw. sind. Hierdurch, d. h. durch einen derartigen speziellen Einschraub-Begrenzungsanschlag, wird ein zu festes Anziehen durch die Bedienperson beim Anbringen des abnehmbaren zweiten Teils an das erste Teil verhindert. Gleichzeitig wird das Lösen des zweiten Teils vom ersten Teil ohne grossen Kraftaufwand sichergestellt. Der Anschlagsbereich des ersten Teils und/oder der Anschlagsbereich des zweiten Teils kann bzw. können auch einen Rastanschlag für das jeweils andere (erste oder zweite) Teil umfassen, beispielsweise derart, dass das zweite Teil bei einer Bewegung relativ zum ersten Teil an einem am ersten Teil ausgebildet Rastanschlag einrastet, wenn das zweite Teil an den Rastanschlag am ersten Teil anschlägt, oder beispielsweise derart, dass das erste Teil bei einer Bewegung relativ zum zweiten Teil an einem am zweiten Teil ausgebildet Rastanschlag einrastet, wenn das erste Teil an den Rastanschlag am zweiten Teil anschlägt. Derartige Ausbildungen von Rastanschlägen gewährleisten eine relativ stabile Verbindung zwischen dem ersten Teil und dem zweiten Teil, welche durch einen geringen Kraftaufwand wieder gelöst werden kann, um das erste Teil bzw. das zweite Teil von dem am jeweils anderen Teil ausgebildeten Rastanschlag wieder zu entfernen.

In diesem Zusammenhang oder auch unabhängig davon kann es vorgesehen sein, dass das zweite Teil im Querschnitt kreisförmig ausgebildet ist, wobei aussenseitig Handhabungsrillen vorgesehen sind. Dadurch wird die Handhabung, d. h. das Festziehen bzw. das Lösen des zweiten Teils an bzw. von dem ersten Teil weiter vereinfacht. In diesem Zusammenhang ist es vorzugsweise vorgesehen, dass das zweite Teil in Richtung des Ausgabebereichs konisch zuläuft, wodurch sich eine die Handhabung weiter vereinfachende klare Trennung zwischen dem verbindungsseitigen Ende des zweiten Teils und dem ausgabeseitigen Ende des zweiten Teil ergibt.

Gemäss einem weiteren Aspekt der erfindungsgemässen Lösung ist es vorgesehen, dass - in Fliessrichtung des emulgierten Fluides gesehen - vor dem Ausgabebereich an dem zweiten Teil ein Prallbereich mit einer Prallfläche und/oder mit einem Prallkörper vorgesehen ist. Dieser Prallkörper bzw. diese Prallfläche dient zum Abbremsen und Verwirbeln des emulgierten Fluides. Ein derartiges Abbremsen bzw. Verwirbeln ist zur Bildung eines organoleptisch optimalen Milchschaums vorteilhaft. Gleichzeitig ist dadurch, dass ein derartiger Prallkörper bzw. eine derartige Prallfläche erst in dem zweiten Teil vorgesehen ist, welches von dem ersten Teil abnehmbar ausgebildet ist, sichergestellt, dass erst in diesem zweiten Teil eine nennenswerte Verschmutzung mit Milchschaumrückständen stattfindet, während das erste Teil relativ rückstandsfrei bleibt. Das zweite Teil jedoch ist durch seine abnehmbare Ausgestaltung einfach austauschbar bzw. einfach zu reinigen.

Im Folgenden wird eine bevorzugte Ausführungsform der erfindungsgemässen Auslaufeinrichtung für eine Milchschäumvorrichtung und eine mit einer erfindungsgemässen Auslaufeinrichtung ausgestattete Milchschäumvorrichtung anhand einer Zeichnung mehr erläutert.

Es zeigen:
- Fig. 1:: eine Seitenansicht auf eine Auslaufeinrichtung gemäss einer Ausführungsform der Erfindung im zusammengesetzten Zustand;
- Fig. 2:: die Darstellung der Auslaufeinrichtung gemäss der Ausführungsform aus Fig. 1 im zusammengesetzten Zustand, in einer Schnittansicht;
- Fig. 3:: eine Seitenansicht eines ersten Teils der erfindungsgemässen Auslaufeinrichtung gemäss der Ausführungsform aus Fig. 1;
- Fig. 4:: eine Darstellung des ersten Teils aus Fig. 3, in einer Schnittansicht;
- Fig. 5:: Seitenansicht eines zweiten Teils der Auslaufeinrichtung aus Fig. 1;
- Fig. 6:: eine Darstellung des zweiten Teils aus Fig. 5, in einer Schnittansicht;
- Fig. 7:: eine Draufsicht im Schnitt auf das zweite Teil aus Fig. 5;
- Fig. 8:: eine Ansicht von unten auf das zweite Teil aus Fig. 5;
- Fig. 9A:: eine Seitenansicht einer Milchschäumvorrichtung, mit einer Auslaufeinrichtung gemäss Fig. 1; und
- Fig. 9B:: die Milchschäumvorrichtung gemäss Fig. 9A, in einem Längsschnitt.

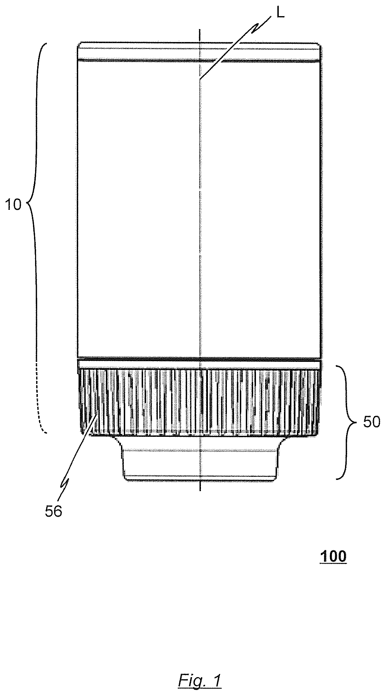

Fig. 1 zeigt eine Seitenansicht einer erfindungsgemässen Auslaufeinrichtung 100 für eine Milchschäumvorrichtung gemäss einer Ausführungsform der Erfindung.

Die Auslaufeinrichtung 100 ist in Fig. 1 in ihrem zusammengesetzten Zustand gezeigt und weist einen Körper auf, welcher aus einem ersten Teil, welches insgesamt mit dem Bezugszeichen 10 versehen ist, sowie einem zweiten Teil, welches insgesamt mit dem Bezugszeichen 50 versehen ist, zusammengesetzt ist. In der Darstellung gemäss Fig. 1, welche eine Seitenansicht darstellt, verdeckt ein Bereich des zweiten Teils 50 einen Bereich des ersten Teils 10. Dieser verdeckte Bereich des ersten Teils 10 ist in der Darstellung in Fig. 1 durch eine strichpunktierte Darstellung der entsprechenden Linie des Bezugszeichens 10 angedeutet.

Die Auslaufeinrichtung 100 ist insgesamt symmetrisch um eine Längsachse L aufgebaut, welche das erste Teil 10 und das zweite Teil 50 durchschneidet. Am zweiten Teil 50 sind zur besseren Handhabung Handhabungsrillen 56 vorgesehen, welche ein An- bzw. Abschrauben des zweiten Teils 50 an das erste Teil 10 bzw. von dem ersten Teil 10 erleichtern.

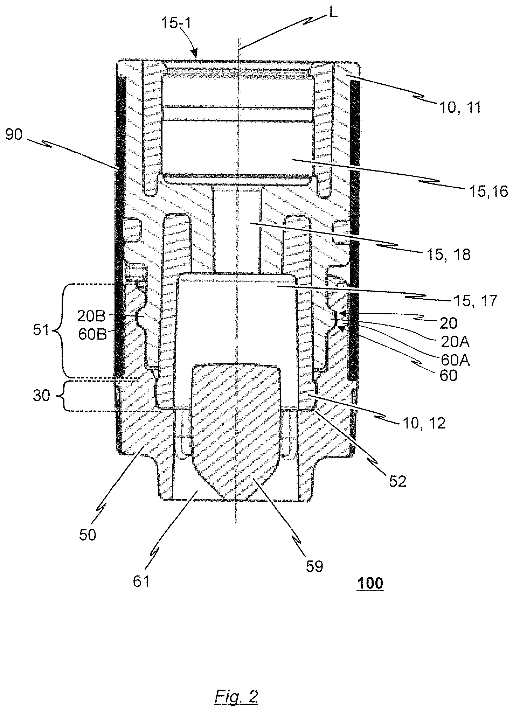

Wie aus der Schnittdarstellung aus Fig. 2 näher ersichtlich, weist das erste Teil 10 einen ersten Bereich 11 auf, welcher aus einem ersten Werkstoff gebildet ist und einen Gewindebereich 20 mit einem zweigängigen (d.h. zwei Gewindegänge 20a und 20b umfassenden) Gewinde aufweist. Das zweite Teil 50 weist seinerseits einen ersten Bereich 51 auf, in welchem ein komplementär zu dem Gewindebereich 20 des ersten Teils 10 ausgebildeter Gewindebereich 60 mit einem zweigängigen (d.h. zwei Gewindegänge 60a und 60b umfassenden) Gewinde ausgebildet ist. Das zweite Teil ist in dem dargestellten Ausführungsbeispiel insgesamt aus einem zweiten Werkstoff gebildet. Der erste Werkstoff ist in dem dargestellten Ausführungsbeispiel ein Hartkunststoff, während der zweite Werkstoff ein Weichkunstoff ist.

Das erste Teil 10 weist weiterhin einen zweiten Bereich 12 auf, welcher aus einem dritten Werkstoff gebildet ist. Der dritte Werkstoff ist wiederum ein Weichkunststoff und in der dargestellten Ausführungsform der gleiche Kunststoff wie der Weichkunststoff des zweiten Teils.

Infolge der festen Verbindung zwischen dem ersten Bereich 11 des ersten Teils 10 und dem ersten Bereich 51 des zweiten Teils 50 wird in einem Bereich, in welchem die Weichkunststoffe des zweiten Bereichs 12 des ersten Teils 10 und eines zweiten Bereichs 52 des zweiten Teils 50 aufeinandertreffen, ein umlaufender Dichtungsbereich 30 ausgebildet, welcher eine dichte Verbindung zwischen dem ersten Teil 10 und dem zweiten Teil 50 sicherstellt.

Gleichzeitig ist dadurch, dass der erste Bereich 11 des ersten Teils 10 aus einem Hartkunststoff gebildet ist, eine sichere und stabile Verbindung zwischen dem ersten Teil 10 und dem zweiten Teil 50 gewährleistet. Gleichzeitig ist das erste Teil 10 durch den Hartkunststoff in seinem ersten Bereich 11 sehr beständig.

Im ersten Teil 10 ist eine Emulsionskammer 15 ausgebildet, welche in dem dargestellten Ausführungsbeispiel aus einem ersten Emulsionsbereich 16, einem zweiten Emulsionsbereich 17 sowie einen die Emulsionsbereiche 16, 17 verbindenden Verbindungskanal 18 gebildet ist. Wie aus Fig. 2 ersichtlich, weist die Emulsionskammer 15 an einer von dem zweiten Teil 50 abgewandten Seite einen Fluid-Einlass 15-1 auf, durch welchen ein Fluid, beispielsweise in Form eines Gemischs aus Milch, Luft und Dampf, in die Emulsionskammer 15 eingelassen werden kann. Die Emulsionsbereiche 16, 17 und der einen unterschiedlichen Querschnitt aufweisende Verbindungskanal 18 sorgen für eine Vermischung, Emulgation und Durchwirbelung des eingebrachten Fluides (Milch-Luft-Dampf-Gemischs). Demgegenüber ist im zweiten Teil 50 ein Prallkörper 59 vorgesehen, welcher bewirkt, dass ein in die Emulsionskammer 15 eingebrachtes Fluid beim Auftreffen auf den Prallkörper 59 abgebremst und in der Emulsionskammer 15 homogenisiert wird, um die Bildung einer möglichst homogenen Mischung von Milch, Luft und Dampf in der Emulsionskammer zu erzielen.

Im vorliegenden Beispiel ist der Prallkörper 59 derart geformt, dass er - wie auch der gesamte Teil 50 auf seinen Aussenumfang bezogen - in Richtung einer Auslauföffnung 61 seinerseits konisch zuläuft. Diese konische Form des Prallkörpers 59 ist nicht zwingend notwendig, hat aber zumindest einen Einfluss auf die räumliche Verteilung bzw. die Strömungsrichtung eines durch die Auslauföffnung 61 strömenden Milch-Luft-Dampf-Gemischs (Milchschaum) und kann dazu beitragen, dass das Milch-Luft-Dampf-Gemisch (Milchschaum) in Form eines propagierenden Strahls mit einem relativ grossen Durchmesser und mit einer relativ homogenen und feinen Verteilung von Milchtropfen und Luftblasen über den gesamten Querschnitt des Strahls aus der Auslauföffnung 61 austreten kann.

Im vorliegenden Beispiel begrenzt das zweite Teil 50 zumindest einen Bereich der Emulsionskammer 15 der Auslaufeinrichtung 100. Dementsprechend ist zumindest ein "Bereich" der Emulsionskammer 15 in dem ersten Teil 10 ausgebildet. Entsprechend kann das zweite Teil 50 auch so gestaltet sein, dass ein (gegebenenfalls anderer) Bereich der Emulsionskammer 15 in dem zweiten Teil 50 ausgebildet ist.

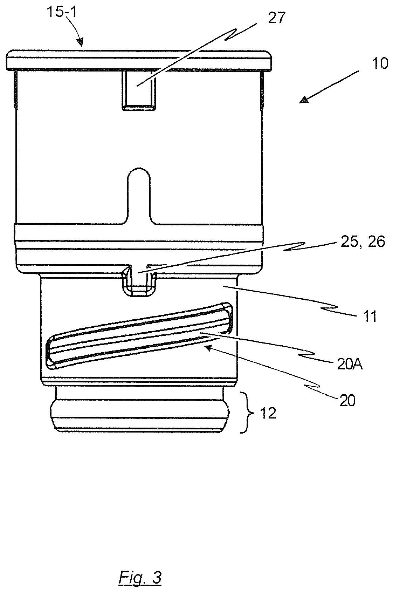

Aus der Darstellung in Fig. 3, welche eine Seitenansicht auf das erste Teil 10 der in den Figuren 1 und 2 dargestellten Ausführungsformen der Erfindung zeigt, ist ersichtlich, dass der Gewindebereich 20 des ersten Teils 10 als zweigängiges Gewinde mit zwei Gewindegängen 20a, 20b ausgebildet ist, wobei in Fig. 3 allerdings nur einer der beiden Gewindegänge sichtbar ist, zumal der andere der beiden Gewindegänge auf einer in Fig. 3 nicht sichtbaren (Rück-) Seite des ersten Teils ausgebildet ist. Oberhalb des Gewindebereichs 20 ist ein Begrenzungsanschlag 25 des ersten Teils 10 vorgesehen, welcher in dem Ausführungsbeispiel als Drehanschlag 26 ausgebildet ist. Dieser stellt sicher, dass das aufgeschraubte zweite Teil, wie es untenstehend noch näher erläutert wird, nicht zu fest auf das erste Teil 10 aufgeschraubt wird. Des Weiteren ist im oberen Bereich des ersten Teils 10 eine Halterippe 27 vorgesehen, welche dem Anbringen einer (in Fig. 2 angedeuteten) metallischen Hülse 90 dient, wobei die Hülse 90 ihrerseits beispielsweise einem optisch ansprechenden Äusseren der Auslaufeinrichtung 100 dienen kann.

Das erste Teil 10 ist aus einem ersten Bereich 11 und einem zweiten Bereich 12 aufgebaut, welche beide im Spritzgussverfahren hergestellt sind und aus Kunststoffen unterschiedlicher Materialhärten gebildet sind. Dabei können der erste Bereich 11 und der zweite Bereich 12 fest miteinander verbunden sein, sodass das erste Teil 10 als einstückiges, aus dem ersten Bereich 11 und dem zweiten Bereich 12 zusammengesetztes Verbundteil ausgebildet ist. Alternativ können der erste Bereich 11 und der zweite Bereich 12 voneinander trennbar sein.

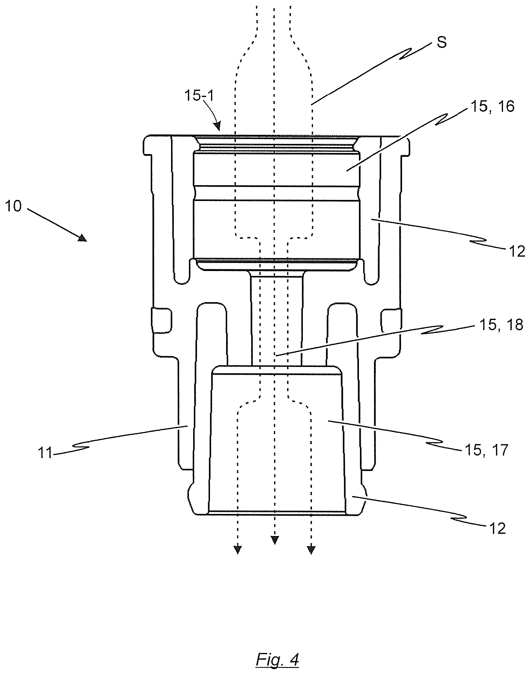

Wie aus der Darstellung in Fig. 4 ersichtlich, bildet der aus einem harten Kunststoffmaterial ausgebildete erste Bereich 11 des ersten Teils 10 eine äussere Umfangsfläche des ersten Teils 10 und erstreckt sich derart in der Längsrichtung des ersten Teils 10, dass die Emulsionsbereiche 16, 17 von dem ersten Bereich 11 umgeben sind. Weiterhin umgrenzt der erste Bereich 11 des ersten Teils 10 den Verbindungskanal 18 der Emulsionskammer 15 und ausserdem die Emulsionsbereiche 16, 17 zumindest bereichsweise an der Innenseite des Emulsionskammer 15 (insbesondere in Abschnitten der Emulsionsbereiche 16, 17, welche an den Verbindungskanal 18 der Emulsionskammer 15 angrenzen), was die Beständigkeit des ersten Teils 10 gegenüber dem durchströmenden Fluid verbessert, dessen Strömungsverlauf in der Darstellung in Fig. 4 strichpunktiert angedeutet ist und mit dem Bezugszeichen S versehen ist.

Der zweite Bereich 12 des ersten Teils 10, welcher aus einem Weichkunststoff gebildet ist, ist an der der Emulsionskammer 15 zugewandten Fläche des ersten Bereichs 11 des ersten Teils 10 angeordnet und begrenzt die Emulsionsbereiche 16, 17 in radialer Richtung (mit Bezug auf die Längsachse L). Der zweite Bereich 12 weitet sich in Strömungsrichtung des Fluides gesehen am stromabwärts gelegenen Ende des ersten Teils 10 in einen Wulstbereich auf, welcher der optimalen Ausbildung des umlaufenden Dichtungsbereichs 30 dient, was im Zusammenhang mit Fig. 2 oben stehend näher erläutert wurde.

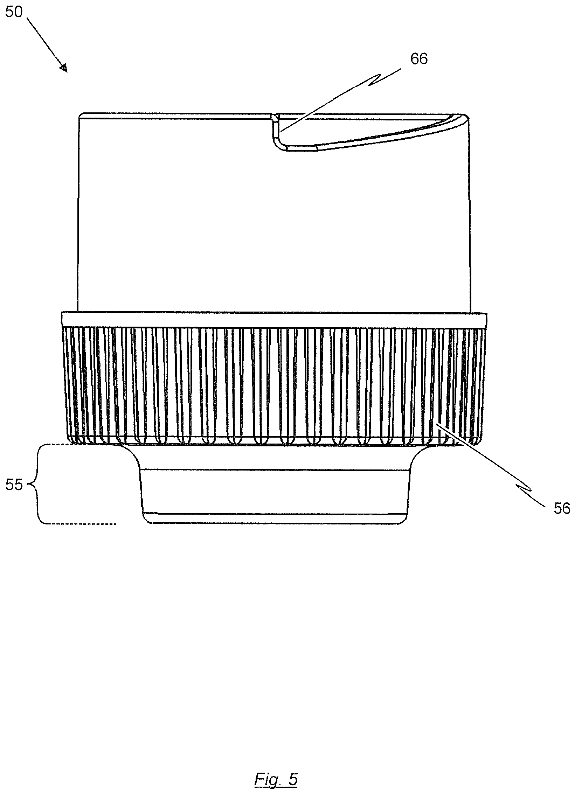

Aus der Seitenansicht in Fig. 5 auf das zweite Teil 50 der erfindungsgemässen Auslaufeinrichtung 100 gemäss dem Ausführungsbeispiel ist der komplementär ausgebildete Begrenzungsanschlag 66 des zweiten Teils 50 näher ersichtlich, welcher an dem Drehanschlag 26 anschlägt, wenn das zweite Teil 50 auf das erste Teil 10 der Auslaufeinrichtung 100 geschraubt wird, um ein zu festes Anziehen durch die Bedienperson zu verhindern und gleichzeitig ein einfaches Lösen des zweiten Teils 50 zu ermöglichen. Das zweite Teil 50 läuft in der Seitenansicht in einem Ausgabebereich 55 für das aufgeschäumte Fluid konisch zu, um optisch einen Anhaltspunkt für die Ausrichtung des zweiten Teils 50 beim Aufbringen des zweiten Teils 50 auf das erste Teil 10 zu bieten und die Handhabung zu vereinfachen. Weiterhin weist das zweite Teil 50 zur vereinfachten Handhabung Handhabungsrillen 56 auf, welche ein Abrutschen beim Befestigen bzw. Lösen verhindern.

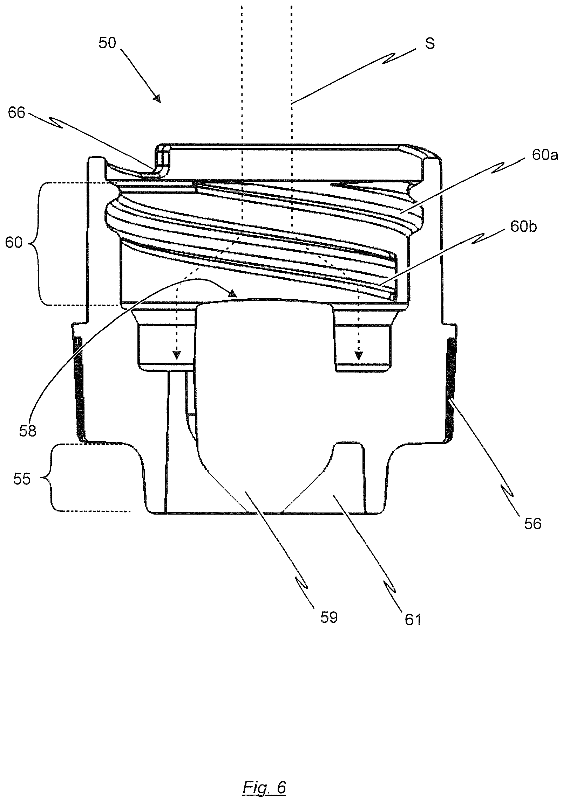

In der in Fig. 6 gezeigten Schnittansicht des zweiten Teils 50 ist der Strömungsverlauf des das zweite Teil 50 durchströmenden Fluides wiederum strichpunktiert angedeutet und mit dem Bezugszeichen S versehen. Für eine einfache Befestigung weist das zweite Teil 50 einen zu dem Gewindebereich 20 des ersten Teils 10 komplementär ausgebildeten Gewindebereich 60 auf, welcher seinerseits einen ersten Gewindegang 60a und einen zweiten Gewindegang 60b aufweist. Durch ein derartig kurzes Gewinde ist eine einfache Handhabung in Folge eines relativ schnell durchführbaren Schraubvorganges gewährleitstet; gleichzeitig ist durch die erfindungsgemäss vorteilhafte Materialwahl zumindest von Bereichen des ersten Teils 10 bzw. des zweiten Teils 50 dennoch eine gute Dichtigkeit zwischen dem ersten Teil 10 und dem zweiten Teil 50 im zusammengebauten Zustand gegeben.

In Bezug auf das durchströmende Fluid in Richtung des Ausgabebereichs 55 gesehen weist das zweite Teil 50 einen Prallkörper 59 auf, welcher stromaufwärts eine Prallfläche 58 aufweist, an welcher das auftreffende Fluid abgebremst und verwirbelt wird. In Richtung einer umlaufenden Auslauföffnung 61 konisch zulaufend, sorgt der Prallköper 59 insgesamt dafür, dass das zweite Teil 50, welches als Ausgabeteil der Auslaufeinrichtung 100 für eine Milchschäumvorrichtung dient, eine hinsichtlich seiner Konsistenz optimalen Milchschaum ausgibt.

Da das zweite Teil 50 von dem ersten Teil 10 abnehmbar ist, können an dem Prallkörper 59 zurückbleibende Milchrückstände leicht beseitigt werden bzw. das zweite Teil 50 kann insgesamt bei einem hohen Verschmutzungsgrad unabhängig von dem ersten Teil 10 einfach ausgetauscht werden.

In dem Ausführungsbeispiel ist das zweite Teil 50 insgesamt aus einem kristallklaren relativ weichen Kunststoff gebildet, welcher eine gute optische Kontrolle des Verschmutzungszustandes des zweiten Teils 50 erlaubt.

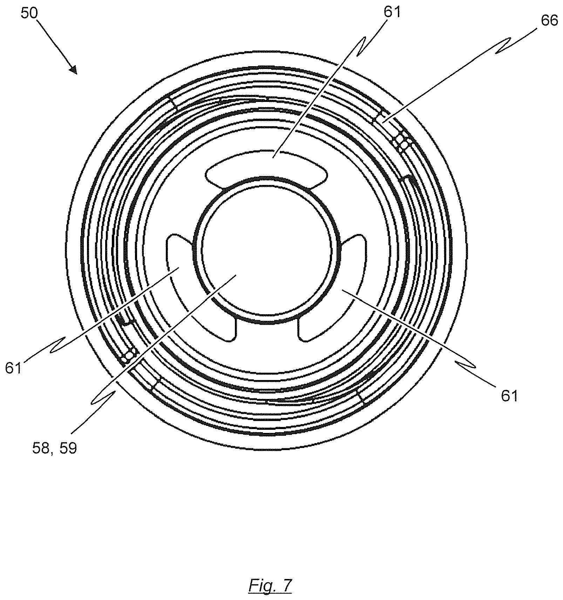

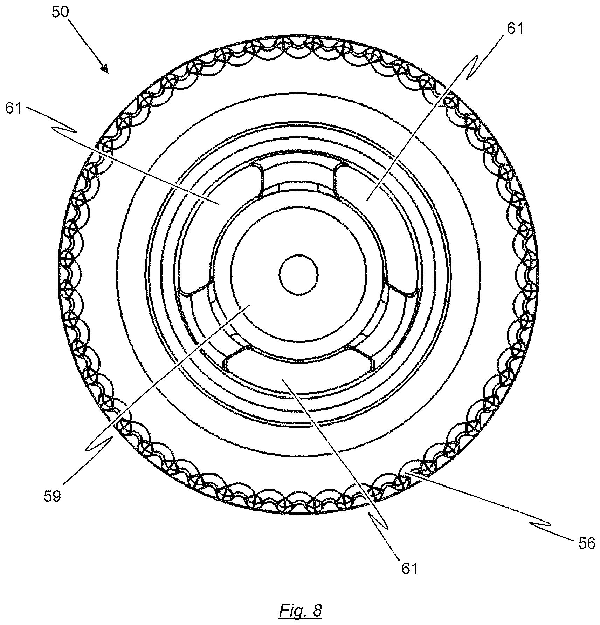

Die Figuren 7 und 8 zeigen zum besseren Verständnis eine Draufsicht (Fig. 7) bzw. eine Ansicht von unten (Fig. 8) des zweiten Teils 50 der Auslaufeinrichtung 100 gemäss der Ausführungsform. In Fig. 7 ist der Prallkörper 59 mit dessen Prallfläche 58 und den umgebenden Auslauföffnungen 61 gut zu erkennen. Fig. 8 zeit die Anordnung des Prallkörpers 59, insbesondere dessen konisches Zulaufen in Strömungsrichtung des Fluides, sowie die den Prallköper 59 umgrenzenden Auslauföffnungen 61.

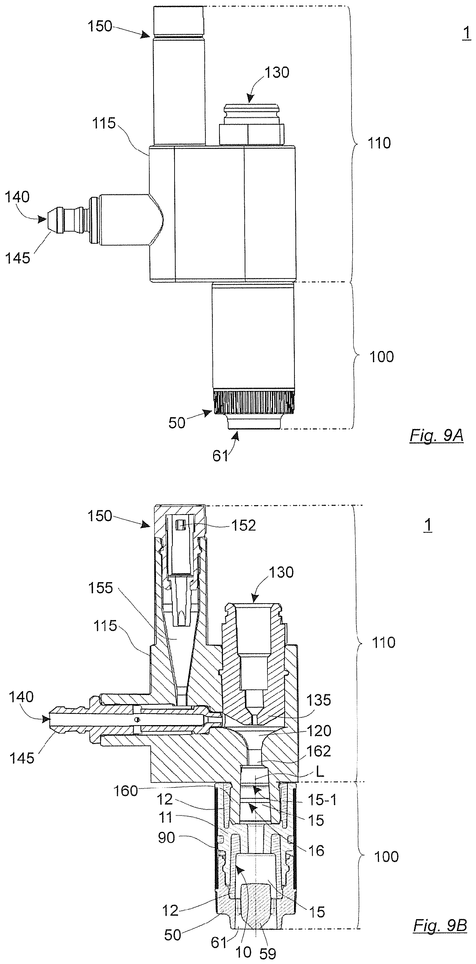

Fig. 9A und 9B zeigen eine Milchschäumvorrichtung 1, welche mit einer erfindungsgemässen Auslaufeinrichtung ausgestattet ist. Die Milchschäumvorrichtung 1 umfasst im vorliegenden Beispiel eine Auslaufeinrichtung 100, welche entsprechend der in Fig. 2 dargestellten Ausführungsform ausgebildet ist, und eine Einrichtung 110 zum Einlassen von Milch und Luft oder gegebenenfalls Milch, Luft und (Wasser-) Dampf in die Emulsionskammer 15 der Auslaufeinrichtung 100.

Wie Fig. 9A und 9B andeuten, weist die Einrichtung 110 ein Gehäuse 115 auf, in welchem ein Hohlraum 120 ausgebildet ist, und umfasst ausserdem einen Einlass 130 zum Zuführen von (Wasser-) Dampf in den Hohlraum 120, einen Einlass 140 zum Zuführen von Milch in den Hohlraum 120 und eine Einrichtung 150 zum Zuführen von Luft in den Hohlraum 120. Der Einlass 140 zum Zuführen von Milch ist mit einem Anschluss 145 für eine (nicht dargestellte) Leitung versehen, deren eines Ende mit dem Anschluss 145 und deren anderes Ende mit einem (nicht dargestellten) Milchreservoir verbunden werden kann, um eine Zufuhr von Milch aus dem Milchreservoir zum Einlass 140 zu ermöglichen.

Wie Fig. 9B ausserdem andeutet, umfasst die Einrichtung 150 einen sich im Innern des Gehäuses 115 erstreckenden, mit dem Hohlraum 120 verbundenen Luftkanal 155 und eine Einlassöffnung 152, über welche der Luftkanal 155 mit der die Milchschäumvorrichtung 1 umgebenden Atmosphäre verbunden ist, sodass Luft durch die Einlassöffnung 152 und den Luftkanal 155 zum Hohlraum 120 gelangen kann.

Wie Fig. 9B weiterhin andeutet, ist der Einlass 130 zum Zuführen von Dampf in einer Dampfdüse 135 ausgebildet, welche in den Hohlraum 120 ragt, sodass Dampf durch den Einlass 130 über die Dampfdüse 135 in den Hohlraum 120 injiziert werden kann. Um auf einfache Weise eine Verbindung zwischen der Einrichtung 110 und der Auslaufeinrichtung 100 zu ermöglichen, ist die Einrichtung 110 mit einem rohrförmigen Anschlussstutzen 160 versehen, welcher über einen Verbindungskanal 162 mit dem Hohlraum 120 verbunden ist.

Der Anschlussstutzen 160 ist derart geformt, dass die Auslaufeinrichtung 100 derart auf den Anschlussstutzen 160 aufsteckbar ist, dass ein an den Fluid-Eingang 15-1 angrenzender Abschnitt der Auslaufeinrichtung 100 formschlüssig auf dem Anschlussstutzen 160 sitzt. Wenn die Auslaufeinrichtung 100 auf den Anschlussstutzen 160 aufgesteckt ist, erstreckt sich der Anschlussstutzen 160 durch den Fluid-Eingang 15-1 und ist entlang seines äusseren Umfangs zumindest im ersten Emulsionsbereich 16 der Emulsionskammer 15 mit dem zweiten Bereich 12 des ersten Teils 10 der Auslaufeinrichtung 100 in Kontakt. Der zweite Bereich 12 kann aus einem Werkstoff gefertigt sein, welcher weicher als der Werkstoff ist, aus dem der erste Bereich 11 besteht, und ausserdem weicher als der Werkstoff ist, aus dem der Anschlussstutzen 160 gefertigt ist. Dies gewährleistet eine fluiddichte Verbindung zwischen dem zweiten Bereich 12 und dem Anschlussstutzen 160, wenn die Auslaufeinrichtung 100 - wie in Fig. 9B dargestellt - auf den Anschlussstutzen 160 aufgesteckt ist.

Um mit der Milchschäumvorrichtung 1 Milchschaum zu erzeugen, kann der Anschluss 145 des Einlasses 140 über eine Leitung mit einem Milchreservoir verbunden werden und der Einlass 130 an eine (nicht dargestellte) Einrichtung zum Erzeugen von (Wasser-) Dampf angeschlossen werden. Wird nun Dampf durch den Einlass 130 bzw. die Dampfdüse 135 in den Hohlraum 120 injiziert, wird entsprechend dem Venturi-Effekt ein Unterdruck im Hohlraum 120 erzeugt, sodass Milch durch den Einlass 140 und Luft durch die Einlassöffnung 152 der Einrichtung 150 angesaugt wird und sich die derart angesaugte Milch und die derart angesaugte Luft im Hohlraum 120 mit dem injizierten Dampf mischen können. Das derart erzeugte Milch-Luft-Dampf-Gemisch strömt schliesslich durch den Verbindungskanal 162 in die Emulsionskammer 15, in der aus dem Milch-Luft-Dampf-Gemisch eine Emulsion entsteht, welche - wie erwähnt - die Emulsionskammer 15 durch die Auslauföffnungen 61 in Form von Milchschaum verlassen kann.

Es sei darauf hingewiesen, dass die Einrichtung 110 auch so ausgebildet sein kann, dass die Zufuhr von Luft durch den Luftkanal 150 bei Bedarf unterbrochen werden kann. In diesem Fall würde - bei einer Zufuhr von Dampf durch den Einlass 130 - lediglich ein Gemisch von Dampf und Milch in die Emulsionskammer 15 gelangen, welches in Form von erwärmter (heisser) Milch aus der Auslaufeinrichtung 100 ausgegeben werden kann. Weiterhin wäre es auch möglich, Milch mittels einer Pumpe durch den Einlass 140 in die Emulsionskammer 15 zu fördern. In diesem Fall wäre es möglich, (kalte oder gegebenenfalls erwärmte) Milch in die Emulsionskammer 15 zu fördern, ohne im Hohlraum 120 auf der Grundlage des Venturi-Effekts durch Einleiten von Dampf einen Unterdruck erzeugen zu müssen. Entsprechend wäre es denkbar, auf eine Zufuhr von Dampf ganz zu verzichten und der Emulsionskammer 15 nur ein Gemisch aus (kalter oder erwärmter) Milch und Luft zuzuführen.

## Patentansprüche

1. Auslaufeinrichtung (100) für eine Milchschäumvorrichtung (1), wobei die Auslaufeinrichtung (100) folgendes aufweist:
einen aus einem ersten Teil (10) und einem zweiten Teil (50) zusammengesetzten Körper, welcher eine Emulsionskammer (15), einen Fluid-Einlass (15-1) zum Einlassen eines Fluids in Form eines Gemischs aus Milch und Luft oder eines Gemischs aus Milch, Luft und Dampf in die Emulsionskammer (15) und einen Ausgabebereich (55) mit mindestens einer Auslauföffnung (61) umfasst,
wobei die Emulsionskammer (15) derart ausgebildet ist, dass ein durch den Fluid-Einlass (15-1) eingelassenes Gemisch aus Milch und Luft oder aus Milch, Luft und Dampf in der Emulsionskammer (15) ein emulgiertes Fluid in Form einer Milch und Luft enthaltenden Emulsion bildet,
wobei die Auslauföffnung (61) zum Ausgeben des in der Emulsionskammer (15) gebildeten emulgierten Fluids ausgebildet ist,
wobei in dem ersten Teil (10) zumindest ein Bereich der Emulsionskammer (15) und der Fluid-Einlass (15-1) ausgebildet sind und das zweite Teil (50) den Ausgabebereich (55) mit der mindestens einen Auslauföffnung (61) aufweist,
wobei das erste Teil (10) einen ersten Bereich (11) des ersten Teils (10) und einen zweiten Bereich (12) des ersten Teils (10) aufweist,
wobei das zweite Teil (50) einen ersten Bereich (51) des zweiten Teils (50) und einen zweiten Bereich (52) des zweiten Teils (50) aufweist,
wobei der erste Bereich (11) des ersten Teils (10) eine äussere Umfangsfläche des ersten Teils (10) bildet und sich derart entlang einer Längsachse (L) des ersten Teils (10) erstreckt, dass die Emulsionskammer (15) von dem ersten Bereich (11) des ersten Teils (10) umgeben ist und der erste Bereich (11) des ersten Teils (10) ein erstes Ende aufweist, welches in Fliessrichtung des emulgierten Fluids dem Fluid-Einlass (15-1) nachgeordnet ist,
wobei der zweite Bereich (12) des ersten Teils (10) an einer der Emulsionskammer (15) zugewandten Fläche des ersten Bereichs (11) des ersten Teils (10) angeordnet ist, sodass der zweite Bereich (12) des ersten Teils (10) zumindest einen Bereich der Emulsionskammer (15) in radialer Richtung mit Bezug auf die Längsachse (L) des ersten Teils (10) begrenzt,
wobei der erste Bereich (11) des ersten Teils (10) zumindest einen Verbindungsbereich des ersten Teils (10) umfasst
und der erste Bereich (51) des zweiten Teils (50) zumindest einen Verbindungsbereich des zweiten Teils (50) umfasst,
wobei der zumindest eine Verbindungsbereich des ersten Teils (10) und der zumindest eine Verbindungsbereich des zweiten Teils (50) derart komplementär zueinander geformt sind, dass der erste Bereich (11) des ersten Teils (10) und der erste Bereich (51) des zweiten Teils (50) an dem Verbindungsbereich des ersten Teils (10) und an dem Verbindungsbereich des zweiten Teils (50) voneinander trennbar verbunden sind, sodass das zweite Teil (50) von dem ersten Teil (10) abnehmbar ist,
**dadurch gekennzeichnet, dass**
das erste Teil (10) zumindest in dem ersten Bereich (11) des ersten Teils (10) aus einem ersten Werkstoff gebildet ist, das zweite Teil (50) zumindest in dem ersten Bereich (51) des zweiten Teils (50) aus einem zweiten Werkstoff gebildet ist und das erste Teil (10) in dem zweiten Bereich (12) des ersten Teils (10) aus einem dritten Werkstoff gebildet ist, wobei der erste Werkstoff ein hartes Kunststoffmaterial ist und der dritte Werkstoff ein Weichkunststoff ist und weicher als der erste Werkstoff ist, und
wobei sich der zweite Bereich (12) des ersten Teils (10) an dem ersten Ende des ersten Bereichs (11) des ersten Teils (10) um die Längsachse (L) des ersten Teils (10) derart erstreckt, dass sich der zweite Bereich (12) des ersten Teils (10) in Fliessrichtung des emulgierten Fluids am stromabwärts gelegenen Ende des ersten Teils (10) in einen Wulstbereich aufweitet und dass, wenn das zweite Teil (50) an dem ersten Teil (10) so angeordnet ist dass der erste Bereich (11) des ersten Teils (10) und der erste Bereich (51) des zweiten Teils (50) an dem Verbindungsbereich des ersten Teils (10) und an dem Verbindungsbereich des zweiten Teils (50) verbunden sind, der Wulstbereich des zweiten Bereichs (12) des ersten Teils (10) an dem zweiten Bereich (52) des zweiten Teils (50) anliegt unter Ausbildung eines um die Längsachse (L) des ersten Teils (10) umlaufenden Dichtungsbereichs (30).

2. Auslaufeinrichtung (100) nach Anspruch 1, wobei der erste Werkstoff härter als der zweite Werkstoff ist, und wobei insbesondere der zweite Werkstoff ein Weichkunststoff ist.

3. Auslaufeinrichtung (100) nach einem der Ansprüche 1 oder 2, wobei im zusammengesetzten Zustand der umlaufende Dichtungsbereich (30) in Fliessrichtung des emulgierten Fluids gesehen den Verbindungsbereichen nachgeordnet ist.

4. Auslaufeinrichtung (100) nach einem der Ansprüche 1-3, wobei der erste Bereich (11) des ersten Teils (10) und der zweite Bereich (12) des ersten Teils (10) fest miteinander verbunden sind, sodass das erste Teil (10) als einstückiges, aus dem ersten Bereich (11) des ersten Teils (10) und dem zweiten Bereich (12) des ersten Teils (10) zusammengesetztes Verbundteil ausgebildet ist.

5. Auslaufeinrichtung (100) nach einem der Ansprüche 1-4, wobei der erste Bereich (11) des ersten Teils (10) und der zweite Bereich (12) des ersten Teils (10) voneinander trennbar ausgebildet sind.

6. Auslaufeinrichtung (100) nach einem der vorhergehenden Ansprüche, wobei die zueinander komplementären Verbindungsbereiche Gewindebereiche (20, 60), vorzugsweise zweigängig ausgebildete Gewindebereiche (20, 60) sind.

7. Auslaufeinrichtung (100) nach einem der vorhergehenden Ansprüche, wobei das erste Teil (10) und/oder das zweite Teil (50) jeweils im Spritzgussverfahren hergestellt sind.

8. Auslaufeinrichtung (100) nach einem der vorhergehenden Ansprüche, wobei das zweite Teil (50) zumindest bereichsweise und vorzugsweise vollständig aus einem transparenten Material, besonders vorzugsweise aus kristallklarem Kunststoff ausgebildet ist.

9. Auslaufeinrichtung (100) nach einem der vorhergehenden Ansprüche, wobei das erste Teil (10) zumindest bereichsweise als eine zylindrische Hülse (90), vorzugsweise als eine zylindrische Metallhülse, ausgebildet ist, welche an dem ersten Bereich (11) des ersten Teils (10) angeordnet ist.

10. Auslaufeinrichtung (100) nach einem der vorhergehenden Ansprüche, wobei die Emulsionskammer (15) einen ersten Emulsionsbereich (16) und einen damit mittels eines Verbindungskanals (18) verbundenen zweiten Emulsionsbereich (17) aufweist, wobei die Emulsionsbereiche (16, 17) innenseitig jeweils von dem ersten Werkstoff zumindest bereichsweise unmittelbar umgrenzt sind.

11. Auslaufeinrichtung (100) nach einem der vorhergehenden Ansprüche, wobei das erste Teil (10) und/oder das zweite Teil (50) jeweils einen Anschlagbereich (25, 66) zur Begrenzung einer für die Herstellung der Verbindung zwischen dem ersten Teil (10) und dem zweiten Teil (50) notwendigen Bewegung, insbesondere einen Drehanschlag zur Begrenzung einer für die Herstellung einer gewindegängigen Verbindung zwischen dem ersten Teil (10) und dem zweiten Teil (50) notwendigen Drehbewegung aufweist.

12. Auslaufeinrichtung (100) nach einem der vorhergehenden Ansprüche, wobei das zweite Teil (50) im Querschnitt kreisförmig ausgebildet ist und vorzugsweise in Richtung des Ausgabebereichs (55) konisch zuläuft, wobei aussenseitig Handhabungsrillen (56) vorgesehen sind.

13. Auslaufeinrichtung (100) nach einem der vorhergehenden Ansprüche, wobei - in Fliessrichtung des emulgierten Fluids gesehen - vor dem Ausgabebereich (55) an dem zweiten Teil (50) ein Prallbereich mit einer Prallfläche (58) und/oder einem Prallkörper (59) zum Abbremsen und Verwirbeln des emulgierten Fluids vorgesehen ist.

14. Milchschäumvorrichtung (1), welche umfasst:
eine Auslaufeinrichtung (100) nach einem der Ansprüche 1-13 und
eine Einrichtung (110) zum Einlassen eines Fluids in Form eines Gemischs aus Milch und Luft oder eines Gemischs aus Milch, Luft und Dampf in die Emulsionskammer (15) der Auslaufeinrichtung (100), wobei die Einrichtung (110) ausgebildet ist, das Fluid durch den Fluid-Einlass (15-1) in die Emulsionskammer (15) einzulassen.

## Claims

1. A dispensing apparatus (100) for a milk-frothing device (1), wherein the dispensing apparatus (100) has the following:
a body that is composed of a first part (10) and of a second part (50), which body comprises an emulsion chamber (15), a fluid inlet (15-1) for letting a fluid in the form of a mixture of milk and air or of a mixture of milk, air and steam into the emulsion chamber (15), and a discharging region (55) having at least one dispensing opening (61),
wherein the emulsion chamber (15) is constructed such that a mixture of milk and air or of milk, air and steam let in through the fluid inlet (15-1) forms in the emulsion chamber (15) an emulsified fluid in the form of an emulsion containing milk and air,
wherein the dispensing opening (61) is constructed for the discharging of the emulsified fluid formed in the emulsion chamber (15),
wherein at least one region of the emulsion chamber (15) and the fluid inlet (15-1) are formed in the first part (10) and the second part (50) has the discharging region (55) having the at least one dispensing opening (61),
wherein the first part (10) has a first region (11) of the first part (10) and a second region (12) of the first part (10),
wherein the second part (50) has a first region (51) of the second part (50) and a second region (52) of the second part (50),
wherein the first region (11) of the first part (10) forms an outer circumferential surface of the first part (10) and extends along a longitudinal axis (L) of the first part (10) in such a way that the emulsion chamber (15) is surrounded by the first region (11) of the first part (10) and the first region (11) of the first part (10) has a first end, which is arranged downstream of the fluid inlet (15-1) in the direction of flow of the emulsified fluid,
wherein the second region (12) of the first part (10) is arranged on a surface of the first region (11) of the first part (10) facing the emulsion chamber (15), so that the second region (12) of the first part (10) delimits at least one region of the emulsion chamber (15) in the radial direction with reference to the longitudinal axis (L) of the first part (10),
wherein the first region (11) of the first part (10) comprises at least one connecting region of the first part (10)
and the first region (51) of the second part (50) comprises at least one connecting region of the second part (50),
wherein the at least one connecting region of the first part (10) and the at least one connecting region of the second part (50) are formed complementary to one another in such a way that the first region (11) of the first part (10) and the first region (51) of the second part (50) are connected so as to be separable from one another at the connecting region of the first part (10) and at the connecting region of the second part (50), so that the second part (50) is able to be removed from the first part (10),
**characterized in that**
the first part (10) is composed of a first material at least in the first region (11) of the first part (10), the second part (50) is composed of a second material at least in the first region (51) of the second part (50), and the first part (10) is formed in the second region (12) of the first part (10) from a third material, wherein the first material is a hard plastic material and the third material is a soft plastic and is softer than the first material, and
wherein the second region (12) of the first part (10) at the first end of the first region (11) of the first part (11) extends about the longitudinal axis (L) of the first part (10) in such a way that, in the direction of flow of the emulsified fluid, the second region (12) of the first part (10) widens into a bulge region at the end of the first part (10) located downstream and that, when the second part (50) is arranged on the first part (10) so that the first region (11) of the first part (10) and the first region (51) of the second part (50) are connected at the connecting region of the first part (10) and at the connecting region of the second part (50), the bulge region of the second region (12) of the first part (10) lies against the second region (52) of the second part (50) with the formation of a circumferential sealing region (30) extending about the longitudinal axis (L) of the first part (10).

2. The dispensing apparatus (100) according to claim 1, wherein the first material is harder than the second material, and wherein in particular the second material is a soft plastic.

3. The dispensing apparatus (100) according to one of claims 1 or 2, wherein in the assembled state, the circumferential sealing region (30) is arranged downstream of the connecting regions, viewed in the direction of flow of the emulsified fluid.

4. The dispensing apparatus (100) according to one of claims 1-3, wherein the first region (11) of the first part (10) and the second region (12) of the first part (10) are securely connected with one another, so that the first part (10) is constructed as a one-piece composite part composed of the first region (11) of the first part (10) and of the second region (12) of the first part (10).

5. The dispensing apparatus (100) according to one of claims 1-4, wherein the first region (11) of the first part (10) and the second region (12) of the first part (10) are constructed so as to be separable from one another.

6. The dispensing apparatus (100) according to one of the preceding claims, wherein the connecting regions which are complementary to one another are threaded regions (20, 60), preferably threaded regions (20, 60) constructed in a double-threaded manner.

7. The dispensing apparatus (100) according to one of the preceding claims, wherein the first part (10) and/or the second part (50) are respectively produced by the injection moulding method.

8. The dispensing apparatus (100) according to one of the preceding claims, wherein the second part (50) is constructed at least partially and preferably completely from a transparent material, particularly preferably from crystal-clear plastic.

9. The dispensing apparatus (100) according to one of the preceding claims, wherein the first part (10) is constructed at least partially as a cylindrical sleeve (90), preferably as a cylindrical metal sleeve which is arranged on the first region (11) of the first part (10) .

10. The dispensing apparatus (100) according to one of the preceding claims, wherein the emulsion chamber (15) has a first emulsion region (16) and a second emulsion region (17) connected therewith by means of a connecting duct (18), wherein the emulsion regions (16, 17) on the inner side are directly defined at least partially respectively by the first material.

11. The dispensing apparatus (100) according to one of the preceding claims, wherein the first part (10) and/or the second part (50) has respectively a stop region (25, 66) for delimiting a movement necessary for the production of the connection between the first part (10) and the second part (50), in particular a rotational stop for delimiting a rotational movement necessary for the production of a threaded connection between the first part (10) and the second part (50).

12. The dispensing apparatus (100) according to one of the preceding claims, wherein the second part (50) is constructed so as to be circular in cross-section and preferably tapers conically in the direction of the discharging region (55), wherein handling grooves (56) are provided on the outer side.

13. The dispensing apparatus (100) according to one of the preceding claims, wherein - viewed in the direction of flow of the emulsified fluid - before the discharging region (55) at the second part (50) an impact region is provided with an impact surface (58) and/or with an impact body (59) for braking and swirling the emulsified fluid.

14. A milk-frothing device (1), which comprises:
a dispensing apparatus (100) according to one of claims 1 - 13 and
an apparatus (110) for letting a fluid in the form of a mixture of milk and air or of a mixture of milk, air and steam into the emulsion chamber (15) of the dispensing apparatus (100), wherein the apparatus (110) is constructed to let the fluid into the emulsion chamber (15) through the fluid inlet (15-1).

## Revendications

1. Système d'écoulement (100), destiné à un dispositif d'émulsionnement (1) de lait, le système d'écoulement (100) comportant ce qui suit :
un corps, composé d'une première partie (10) et d'une deuxième partie (50), laquelle comprend une chambre d'émulsion (15), une entrée (15-1) de fluide, destinée à faire entrer un fluide, sous la forme d'un mélange de lait et d'air ou d'un mélange de lait, d'air et de vapeur dans la chambre d'émulsion (15) et une zone distributrice (55), pourvue d'au moins un orifice de sortie (61),
la chambre d'émulsion (15) étant conçue de telle sorte, qu'un mélange de lait et d'air ou de lait, d'air et de vapeur qui est entré par l'entrée (15-1) de fluide forme dans la chambre d'émulsion (15) un fluide émulsionné, sous la forme d'une émulsion contenant du lait et de l'air,
l'orifice de sortie (61) étant conçu pour distribuer le fluide émulsionné formé dans la chambre d'émulsion (15) ,
dans la première partie (10) étant conçues au moins une zone de la chambre d'émulsion (15) et l'entrée (15-1) de fluide et la deuxième partie (50) comportant la zone distributrice (55), pourvue de l'au moins un orifice de sortie (61),
la première partie (10) comportant une première zone (11) de la première partie (10) et une deuxième zone (12) de la première partie (10),
la deuxième partie (50) comportant une première zone (51) de la deuxième partie (50) et une deuxième zone (52) de la deuxième partie (50),
la première zone (11) de la première partie (10) formant une surface périphérique externe de la première partie (10) et s'étendant le long d'un axe longitudinal (L) de la première partie (10) de telle sorte, que la chambre d'émulsion (15) soit entourée par la première zone (11) de la première partie (10) et que la première zone (11) de la première partie (10) comporte une première extrémité, laquelle, dans la direction d'écoulement du fluide émulsionné, est placée en aval de l'entrée (15-1) de fluide,
la deuxième zone (12) de la première partie (10) étant placée sur une surface de la première zone (11) de la première partie (10) qui fait face à la chambre d'émulsion (15), de telle sorte que la deuxième zone (12) de la première partie (10) délimite au moins une zone de la chambre d'émulsion (15) en direction radiale, en rapport à l'axe longitudinal (L) de la première partie (10),
la première zone (11) de la première partie (10) comprenant au moins une zone d'assemblage de la première partie (10)
et la première zone (51) de la deuxième partie (50) comprenant au moins une zone d'assemblage de la deuxième partie (50),
l'au moins une zone d'assemblage de la première partie (10) et l'au moins une zone d'assemblage de la deuxième partie (50) étant façonnées de manière complémentaire l'une à l'autre, de telle sorte que la première zone (11) de la première partie (10) et la première zone (51) de la deuxième partie (50) soient assemblées de manière séparable l'une de l'autre sur la zone d'assemblage de la première partie (10) et sur la zone d'assemblage de la deuxième partie (50), de telle sorte que la deuxième partie (50) soit susceptible d'être retirée de la première partie (10),
**caractérisé en ce qu'**
au moins dans la première zone (11) de la première partie (10), la première partie (10) est formée d'une première matière (50), au moins dans la première zone (51) de la deuxième partie (50), la deuxième partie est formée d'une deuxième matière, et dans la deuxième zone (12) de la première partie (10), la première partie (10) est formée d'une troisième matière, la première matière étant une matière plastique dure et la troisième matière étant une matière plastique souple et étant plus souple que la première matière, et
la deuxième zone (12) de la première partie (10) s'étendant sur la première extrémité de la première zone (11) de la première partie (10) autour de l'axe longitudinal (L) de la première partie (10) de telle sorte, que dans la direction d'écoulement du fluide émulsionné, la deuxième zone (12) de la première partie (10) s'évase en une zone de bourrelet, sur l'extrémité située en aval de la première partie (10) et que, lorsque la deuxième partie (50) est placée sur la première partie (10) de telle sorte que la première zone (11) de la première partie (10) et la première zone (51) de la deuxième partie (50) soient assemblées sur la zone d'assemblage de la première partie (10) et sur la zone d'assemblage de la deuxième partie (50), la zone de bourrelet de la deuxième zone (12) de la première partie (10) soit adjacente à la deuxième zone (52) de la deuxième partie (50), en créant une zone d'étanchéité (30) périphérique autour de l'axe longitudinal (L) de la première partie (10).

2. Système d'écoulement (100) selon la revendication 1, la première matière étant plus dure que la deuxième matière et notamment la deuxième matière étant une matière plastique souple.

3. Système d'écoulement (100) selon l'une quelconque des revendications 1 ou 2, dans l'état constitué, considérée dans la direction d'écoulement du fluide émulsionné, la zone d'étanchéité (30) périphérique étant placée en aval des zones d'assemblage.

4. Système d'écoulement (100) selon l'une quelconque des revendications 1 à 3, la première zone (11) de la première partie (10) et la deuxième zone (12) de la première partie (10) étant fixement assemblées l'une à l'autre, de telle sorte que la première partie (10) soit conçue sous la forme d'une pièce composite en monobloc, constituée de la première zone (11) de la première partie (10) et de la deuxième zone (12) de la première partie (10).

5. Système d'écoulement (100) selon l'une quelconque des revendications 1 à 4, la première zone (11) de la première partie (10) et la deuxième zone (12) de la première partie (10) étant conçues en étant séparables l'une de l'autre.

6. Système d'écoulement (100) selon l'une quelconque des revendications précédentes, les zones d'assemblage complémentaires l'une de l'autre étant des zones filetées (20, 60), de préférence des zones filetées (20, 60) conçues à deux pas.

7. Système d'écoulement (100) selon l'une quelconque des revendications précédentes, la première partie (10) et / ou la deuxième partie (50) étant fabriquées chacune par moulage par injection.

8. Système d'écoulement (100) selon l'une quelconque des revendications précédentes, au moins par endroits, et de préférence totalement, la deuxième partie (50) étant constituée d'une matière transparente, notamment de préférence d'une matière plastique cristalline.

9. Système d'écoulement (100) selon l'une quelconque des revendications précédentes, la première partie (10) étant constituée au moins par endroits sous la forme d'une douille (90) cylindrique, de préférence d'une douille métallique cylindrique, laquelle est placée sur la première zone (11) de la première partie (10).

10. Système d'écoulement (100) selon l'une quelconque des revendications précédentes, la chambre d'émulsion (15) comportant une première zone d'émulsion (16) et une deuxième zone d'émulsion (17), assemblée avec celle-ci au moyen d'un canal d'assemblage (18), les zones d'émulsion (16, 17) étant directement délimitées chacune sur leur face interne, au moins par endroits par la première matière.

11. Système d'écoulement (100) selon l'une quelconque des revendications précédentes, la première partie (10) et/ou la deuxième partie (50) comportant chacune une zone de butée (25, 66), destinée à délimiter un déplacement nécessaire pour la création de l'assemblage entre la première partie (10) et la deuxième partie (50), notamment une butée en rotation, destinée à délimiter un déplacement en rotation, nécessaire pour la création d'un assemblage par filetage entre la première partie (10) et la deuxième partie (50).

12. Système d'écoulement (100) selon l'une quelconque des revendications précédentes, la deuxième partie (50) étant conçue de forme circulaire dans sa section transversale et convergeant de forme conique, de préférence dans la direction de la zone distributrice (55), sur la face extérieure étant prévues des cannelures de manipulation (56).

13. Système d'écoulement (100) selon l'une quelconque des revendications précédentes, à l'avant de la zone distributrice (55) (considérée dans la direction d'écoulement du fluide émulsionné) étant prévue sur la deuxième partie (50) une zone d'impact, pourvue d'une surface d'impact (58) et /ou d'un corps d'impact (59), destinée à freiner un tourbillonnement du fluide.

14. Dispositif d'émulsionnement (1) de lait, lequel comprend :
un système d'écoulement (100) selon l'une quelconque des revendications 1 à 13 et
un système (110) destiné à faire entrer un fluide sous la forme d'un mélange de lait et d'air ou d'un mélange de lait, d'air et de vapeur dans la chambre d'émulsion (15) du système d'écoulement (100), le système (110) étant conçu pour faire entrer du fluide à travers l'entrée de fluide (15-1) dans la chambre d'émulsion (15) .
